# EUROPEAN PATENT APPLICATION

(11) **EP 2 293 271 A1**
(43) Date of publication of application: **09.03.2011**
(21) Application number: 09730194.9
(22) Date of filing: 27.03.2009
(51) Int. Cl.: G09F 9/00, G02B 5/30

(54) **OPTICAL DISPLAY DEVICE MANUFACTURING METHOD**

(30) Priority: 07.04.2008 JP 2008099359; 24.03.2009 JP 2009072405
(71) Applicant: Nitto Denko Corporation, Ibaraki-shi Osaka 567-8680 (JP)
(72) Inventor: TAKEDA, Kentarou, Ibaraki-shi Osaka 567-8680 (JP); YAMAMOTO, Shouji, Ibaraki-shi Osaka 567-8680 (JP); SUZUKI, Mitsuru, Ibaraki-shi Osaka 567-8680 (JP)
(74) Representative: Grünecker, Kinkeldey, Stockmair & Schwanhäusser Anwaltssozietät
(86) International application number: PCT/JP2009/056339
(87) International publication number: WO 2009/125684

(57) **Abstract**

A method for manufacturing an optical display device wherein optical members are arranged on an optical display unit by laminating the optical members in turn onto the optical display unit is provided. A method for manufacturing an optical display device having optical members on an optical display unit, comprises steps of laminating each of the optical member of plural optical members in turn on the optical display unit; wherein a release film is laid on each of the optical members through a pressure-sensitive adhesive interposed therebetween; feeding a long release-film-attached optical member from a material roll of the release-film-attached optical member; inspecting the optical member; cutting the optical member and the pressure-sensitive adhesive into a predetermined size without cutting the release film in accordance with a result of the inspection; and laminating the release-film-peeled optical member on the optical display unit through the pressure-sensitive adhesive interposed therebetween.

## Description

### Technical Field

The present invention relates to a method for manufacturing an optical display device wherein optical members are bonded onto an optical display unit.

### Background Art

Hitherto, a manufacturing system described JP-A-2007-140046 (Patent document 1) has been known. This manufacturing system includes a supplying means for pulling out, from a roll on which a long sheet material having an optical film which is a member of an optical display device is wound, the long sheet material, so as to be supplied; a detecting means for detecting one or more defects of the long sheet material pulled out by the supplying means; a cutting and processing means for cutting the long sheet material based on a result of the detection of the detecting means, and processing the material into individual sheet materials; a transferring means for transferring the sheet materials cut and processed by the cutting and processing means in order to be bonded; and a bonding and processing means for bonding each of the sheet materials transferred by the transferring means onto an optical display unit which is a member of the optical display device; wherein the individual means are arranged on a continuous manufacturing line. In other words, a long sheet material having an already formed optical film is used, the long sheet material is directly cut and processed into desired sizes, and the cut sheet material pieces are each bonded onto an optical display unit.

### Prior Art Document

Patent document 1: JP-A-2007-140046

### Disclosure of the Invention

### Problems to be solved by the invention

However, in the case of Patent document 1 described above, after a material roll of a long sheet material is once formed, the long sheet material is bonded onto an optical display unit such as a liquid crystal panel; therefore, it is necessary to store and feed the long sheet material as a material-wound roll, which is wound into a roll form. In this case, at the time of winding the sheet material into a roll form, it is feared that a nip of a contaminant or a winding defect is generated. Moreover, the work of the winding is required. Thus, the manufacturing system is required to be improved in workability.

The sheet material is, for example, a polarizing plate including a polarizer and a polarizer protecting film formed on each surface of the polarizer, or an optical compensation-film-attached polarizing plate wherein an optical compensation film is laminated on such a polarizing plate. In short, the sheet material has a multilayered structure; thus, even if a defect is present on only one of its films, the sheet material is determined to be defective as a whole in regions along the thickness direction of the material. As a result, the material cannot be bonded onto any liquid crystal panel, and is then discarded. Thus, when the sheet material has a defect based on any one of the constituting members thereof, the other members each having no defect are also discarded. As a whole, the yield ratio of the members deteriorates. Thus, an improvement has been desired.

When the sheet material is a multilayered film, the material may be curved in the width direction of the sheet when the elastic moduli of the laminated optical members are different from each other. When the multilayered film in such a curved state is bonded onto an optical display unit, it is difficult that the bonding is attained with good precision.

In light of the above-mentioned actual situation, the invention has been made. An object thereof is to provide a method for manufacturing an optical display device wherein optical members are arranged on an optical display unit by laminating the optical members in turn onto the optical display unit.

### Means for solving the problems

In order to solve the problems, the inventors have made eager researches to achieve the following invention:

The optical display device manufacturing method of the invention is a method for manufacturing an optical display device having optical members on an optical display unit, comprises step of laminating each the optical member of plural optical members in turn on the optical display unit.

According to this manner, each the optical member can be in turn on the optical display unit; therefore, when the whole of the manufacture is considered, the yield ratio of each of the optical members is largely improved. It is also unnecessary that the multilayered laminated optical members to be finally formed onto the optical display unit are beforehand manufactured so as to be provided as a material roll. Thus, an effect of decreasing manufacturing costs and storing costs is large. About any laminated optical member wherein many optical members are laminated onto each other, the curving property thereof along the width direction is large. However, the manufacture of the member can be omitted. Moreover, it is unnecessary to bond a laminated optical member having a large curving property onto an optical display unit; thus, the bonding work also becomes simple. Instead, each the optical member is in turn laminated on an optical display unit, thereby making it possible to manufacture an optical display device.

In an embodiment of the invention, the invention comprises steps of inspecting the optical member, and cutting the optical member in accordance with result of the inspection.

According to this manner, the optical member is inspected and the optical member can be cut in accordance with the results of the inspections. The wording "inspection" means that one or more defects of the optical member is inspected. When the optical member is cut in accordance with the inspection result, the cutting can be attained to avoid one or more regions of the defect(s). It is preferred that the defect region(s) is/are cut into one or more predetermined sizes as one or more defective articles and the defective article(s) is/are rejected by, for example, an rejection apparatus so as not to be bonded to the optical display unit. When the optical member is cut, the optical member can be into the state of pieces. Alternatively, when a release film is formed on the optical member through a pressure-sensitive adhesive layer interposed therebetween, the pressure-sensitive adhesive layer and the optical display unit can be cut without cutting this release film. Any one of the optical member is, for example, a polarizer film, for which defect-inspection is largely necessary, or some other optical film. An optical member to be inspected is, for example, an optical member which is one out of optical members to be laminated and is more expensive than the other optical members to be laminated. When the expensive optical member is inspected and the member is subjected to cutting and processing in accordance with a result of the inspection, an effect of decreasing costs largely can be produced.

In an embodiment of the invention, the optical members are each made into the state of pieces each having a predetermined size, and subsequently the respective pieces of the optical members are in turn laminated on the optical display unit.

According to this manner, it is possible to process each of the optical members beforehand into the piece state, and next bond the respective pieces of the optical members in turn on the optical display unit.

Another embodiment of the invention is an embodiment in which:
a release film is laid on each of the optical members through a pressure-sensitive adhesive interposed therebetween;
comprising steps of:
   feeding a long release-film-attached optical member from a material roll of the release-film-attached optical member;
   inspecting the optical member;
   cutting the optical member and the pressure-sensitive adhesive into a predetermined size without cutting the release film in accordance with a result of the inspection;
   peeling the release film from the optical member; and laminating the release-film-peeled optical member on the optical display unit through the pressure-sensitive adhesive interposed therebetween.

According to this manner, a material roll of each of the release-film-attached optical members is beforehand provided. From this material roll of the release-film-attached optical member, a long release-film-attached optical member is fed; this optical member is inspected; in accordance with the inspection result, the optical member and the pressure-sensitive adhesive are cut into the predetermined size without cutting the release film; the release film is peeled from the optical member; and the release-film-peeled optical member can be laminated on the optical display unit through the pressure-sensitive adhesive interposed therebetween. In other words, a first optical member is bonded onto the optical display unit; and next, a second optical member is bonded onto the first optical member so as to be laminated thereon, whereby each of the optical members can be in turn bonded onto the optical display unit.

Thus, it is unnecessary to manufacture any laminated optical member including many optical members in advance. Thus, the workability is improved. Moreover, there is not caused a nip of a contaminant which may be generated in the process of producing the laminated optical member. Thus, the yield ratio of the manufacture also becomes good. Additionally, a defect-inspection is made about each of the optical members; thus, the yield ratio of the optical member is largely yielded, so that manufacturing costs are largely reduced. Furthermore, in each of the optical members, there is not generated a curve in the laminated optical member in the film width direction or longitudinal direction. Thus, the precision of the bonding of each of the optical members onto the optical display unit is good.

In any one of the embodiments, a different optical member is arranged on a surface of the optical display unit which is different from the surface of the optical display unit on which the optical members are arranged.

According to this manner, plural optical members can be laminated onto both surfaces of the optical display unit, respectively. When the optical display unit is a liquid crystal panel, the structure of the optical members laminated on one of the surfaces may be identical with or different from the structure of the optical members laminated on the other surface. The structures are set in accordance with the specifications of the optical display device.

Each of the embodiments comprises a changing step using an optical-member-material-roll-changing means so as to select the specifications of the optical members in accordance with the specifications of the optical display device.

In this changing step, it is preferred that: information on the specifications of the optical display device (for example, the size thereof, and the kind of its liquid crystal cell) is gained; in accordance with the information on the specifications, the specifications of the optical members (for example, the sizes thereof, and the kinds thereof) are selected; and material rolls of the optical members having the selected specifications are automatically changed into a line for the manufacture.

In any one of the embodiments,
when the optical member is inspected, the release film thereof is peeled to inspect the optical member, and subsequently a release film is bonded onto the optical member through the pressure-sensitive adhesive interposed therebetween.

According to this manner, the release film is removed, and subsequently the defect-inspection of the optical member is made. Thus, the defect-inspection of the optical member can be made without the need for considering a retardation contained inherently in the release film, nor any defect adhering to the release film or contained therein, such as a contaminant or a scratch. A method for the defect-inspection will be described later.

Any one of the embodiments comprises a rejecting step of cutting the optical member into the predetermined size when the optical member is determined to be defective as a result of the inspection of the optical member, and rejecting the optical member.

When one or more defects are detected in the defect-inspection so that the optical member is determined to be defective, the cutting apparatus cuts the optical member into the predetermined size so as to avoid one or more regions of the defect (s) of the optical member (the cutting may be referred to as a skip cut). The defect-containing region(s) is/are rejected (removed) by a refection apparatus that is to be described later. In this way, the yield ratio of the optical member is largely improved.

The optical display device manufacturing method of the invention further comprises an inspecting step in which after the optical members are bonded onto the single surface or both surfaces of the optical display unit, the bonded state thereof is inspected. Furthermore, the individual steps are carried out in a continuous manufacturing line. The "inspection of the bonded state" is, for example, an inspection of a slippage of the bonding of the optical members and the optical display unit, a twist thereof in the bonding, an air bubble incorporation, or the like.

The optical display device manufacturing method of the invention further comprises an inspecting step in which after the optical members are bonded onto a single surface or both surfaces of the optical display unit, the bonded state thereof is inspected. Furthermore, the individual steps are carried out in a continuous manufacturing line. The "defect(s)" mean(s), for example, the following in each of the surfaces or at the inside: a stain, a scratch, an especial defect as twisted, which is in such a hit mark that a contaminant is nipped and may be referred to as a knick, an air bubble, and a contaminant.

Each the "optical member" may be any optical member as far as the member partially has an optical film. Each the "optical member" may be a monolayered optical film, or may be a laminated optical film including laminated optical films. On the optical film, a different film member or a pressure-sensitive adhesive layer may be laminated. On the optical member, a pressure-sensitive adhesive may be formed for bonding the member onto an adherend. The optical member may be, for example, a polarizer or a polarizing plate. The polarizing plate has a structure including a polarizer, and a polarizer protecting film laminated on a single surface or each surface of the polarizer. Thereon, a surface protecting film may be laminated for protecting the polarizer or polarizing plate from being scratched or the like when the optical member is transported. A release film may be laid on a surface of the optical member which is different from the surface thereof on which the surface protecting film is formed through a pressure-sensitive adhesive interposed therebetween. The structure in this case is referred to as a release-film-attached optical member.

Examples of the optical member include compensation films such as a retardation film and a brightness enhancement film. The structure thereof is, for example, a structure wherein the compensation film is laminated on a polarizer protecting film. The structure is also, for example, a structure wherein the compensation film is laminated directly on a polarizer so as to function as a polarizer protecting film.

When the optical member or any one of the other film members is laminated, a pressure-sensitive adhesive is used. The pressure-sensitive adhesive is set in accordance with the kind of the optical member.

When a polarizer and a pressure-sensitive adhesive layer are laminated directly onto each other, it is preferred to form a coating layer on the bonding surface of the polarizer. This coating layer is for protecting the polarizer or improve the adhesion thereof onto the pressure-sensitive adhesive. The coating layer is preferably an adhesive made mainly of polyvinyl alcohol, isocyanate, cyanoacrylate, aziridine, or the like.

The optical display unit in the invention is, for example, a glass substrate unit of a liquid crystal cell, or an organic EL luminous body unit. The optical display unit is preferably subjected beforehand to cleaning treatment before the unit is bonded onto the optical members.

### Brief Description of the Drawings

[Fig. 1] Fig. 1 shows a flowchart of an optical display device manufacturing method.
[Fig. 2] Fig. 2 shows a flowchart for changing optical members.
[Fig. 3] Fig. 3 shows a view for explaining a system for manufacturing an optical display device.

### Description of Reference Sign

W optical display unit (liquid crystal panel)

### Mode for Carrying Out the Invention

### (Optical member)

Optical member set on the optical display unit in the invention are each, for example, a polarizer film, a retardation film, a brightness enhancement film, or a laminated optical film wherein two or more thereof are combined with each other. A monolayered optical film is, for example, a polarizer. The laminated optical film is, for example, a laminated structure composed of a retardation film and a polarizer, of a retardation film, a polarizer and a brightness enhancement film, or of others.

### (Flowchart of manufacturing an optical display device)

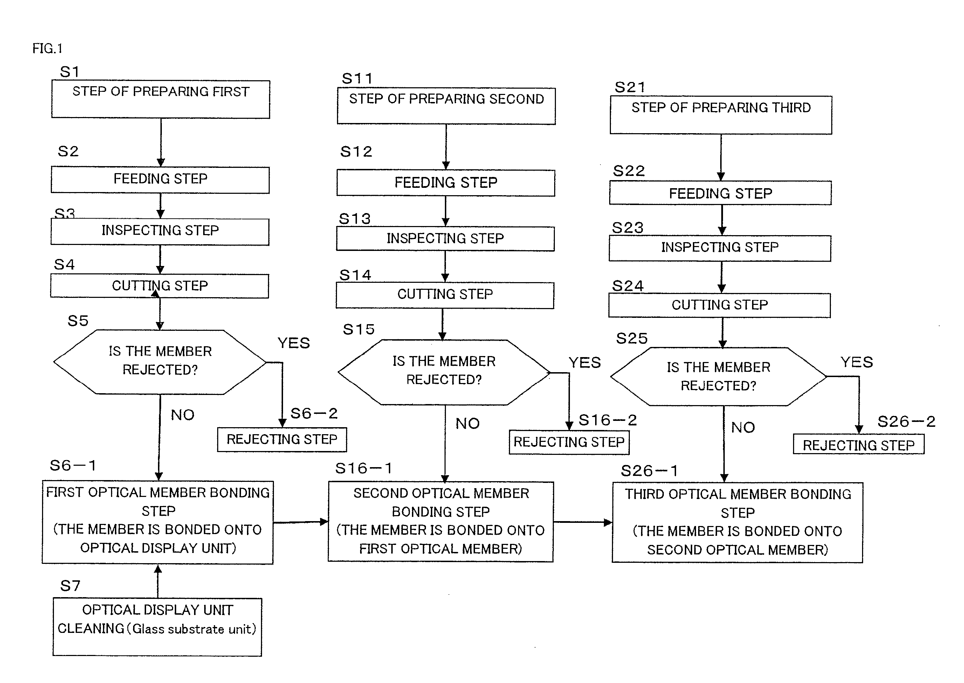

An embodiment 1 of the invention will be described hereinafter. Fig. 1 shows a flowchart of an optical display device manufacturing method. Each the optical member of plural optical members is in turn laminated onto an optical display unit. Finally, a product wherein the plural optical members are laminated on the optical display unit is yielded.

(1) Step of preparing a material roll of a first optical member (S1 in Fig. 1) : A long first optical member is prepared as a material roll. A release film is bonded on the first optical member through a pressure-sensitive adhesive interposed therebetween. When this release film is peeled, the pressure-sensitive adhesive is formed on the first optical member. Through this pressure-sensitive adhesive, the first optical member is bonded and formed on a surface of the optical display unit.

The first optical member is, for example, a monolayered polarizer film, polarizer protecting film (functioning as an optical film), or compensation film. The first optical member may be made of a laminated optical film; examples of this case include a case where a polarizer protecting film is laminated on both surfaces or a single surface of a polarizer film through an adhesive interposed therebetween to form a polarizing plate, and a case where a polarizing plate or polarizer film is laminated on a compensation film through an adhesive interposed therebetween.

(2) Feeding step (S2 in Fig. 1): The release-film-attached first optical member is rolled out from the prepared material roll of the release-film-attached first optical member, so as to be fed at the downstream side. A first feeder (not illustrated) for feeding the release-film-attached first optical member includes, for example, a pair of nip rollers, a tension roller, a rotary drive, an accumulator, a sensor, a controller, and the like.

(3) Inspecting step (S3 in Fig. 1): A defect-inspection apparatus is used to inspect defects of the first optical member. The method for the defect-inspection referred to herein is, for example, a method of, to the first optical member, performing imaging and image processing by use of transmitted light and reflected light to perform defect-analysis and defect-determination, thereby determining whether or not the member is defective. When the optical member, which is an inspection target, is a polarizer, the method may be a method of arranging, between a photographing means (for example, a CCD camera) and the inspection target, a polarizing film for inspection so as to be in a crossed nicol state between the film and the polarization axis of the polarizing plate, which is the inspection target (the arrangement may be referred to as 0-degree cross), and then performing imaging and image processing thereto; and a method of arranging, between a CCD camera and the inspection target, a polarizing film for inspection so as to give a predetermined angle (for example, an angle in a range more than 0 degree and not more than 10 degrees) between the film and the polarization axis of the polarizing plate, which is the inspection target (the arrangement may be referred to as x-degree cross), and then performing imaging and image processing thereto. The algorithm for the image processing may be a known manner. For example, the defect-detection can be attained by, for example, grayscale determination based on binarization.

The information on each of the defects obtained by the defect-inspection apparatus is combined with positional information thereon (for example, position coordinates thereof), and the resultant information is transmitted onto the controller (not illustrated) so as to contribute to a cutting method based on a cutting apparatus which is to be described later.

### (Another embodiment)

In the above-mentioned defect-inspection, the defect-inspection is made in the state where the release film is laminated on the first optical member. In this case, the inspection apparatus is affected by a retardation, a contaminant, a scratch or a stain that is contained in the release film, so that even a fault which should not be regarded as any defect may be determined as a defect. As a result, the optical member may be determined to be defective. Thus, in order to remove any effect of the release film, the release film is peeled before the defect-inspection, and subsequently the first optical member (containing the pressure-sensitive adhesive) is caused to undergo the defect-inspection. After the inspection, a release film is newly formed on the first optical member through a pressure-sensitive adhesive interposed therebetween. In this case, the first optical member can be caused to undergo the defect-inspection without the need for considering any retardation contained in the release film, or any contaminant, scratch or the like that adheres onto the release film or is contained therein.

When a release film is newly bonded thereto, it is preferred for keeping the flatness thereof to perform the bonding so as not to generate air bubbles or other bubbles.

(4) Cutting step (S4 in Fig. 1): Without cutting the release film, a cutting apparatus cuts the first optical member and the pressure-sensitive adhesive layer into a predetermined size. Examples of the cutting means include a laser, a cutter, and other known cutting means. Based on the defect information obtained by the defect-inspection apparatus, the member and the layer are cut in such a manner that regions of the defects are not laminated on any optical display unit. The regions are rejected by a rejection apparatus. In this way, the yield ratio of the first optical member is largely improved.

(5) Non-defective-article determination (S5 in Fig. 1) : As a result of the defect-inspection by the defect-inspection apparatus, it is determined whether or not the first optical member is determined to be non-defective. The determination criterion for the non-defective-article determination is beforehand set, and is set in accordance with, for example, the number of defects in each predetermined area, the sizes of the defects, and the kind of the defect. As the display performance is required to be higher, the non-defective-article determination is made stricter.

(6) Step of bonding the first optical member (S6-1 in Fig. 1) : The first optical member is, when it is a member determined to be non-defective in the defect-inspection, caused to undergo a bonding processing. While a peeling apparatus, which is to be described later, is used to remove the release film (peeling step), a bonding apparatus is used to bond the first optical member, from which the release film has been removed, onto an optical display unit through the pressure-sensitive adhesive layer interposed therebetween. At the time of the bonding, the first optical member and the optical display unit are sandwiched between a pair of rolls to bond them onto each other under pressure, as described later.

(7) Step of rejecting the first optical member (S6-2 in Fig. 1): When the first optical member is determined to be defective in the defect-inspection, a rejecting processing of the first optical member is conducted. An example of the manner of the rejecting processing is to be described later.

(8) Cleaning step (S7 in Fig. 1): The front surface of the optical display unit is beforehand cleaned by a polishing and cleaning apparatus and a water cleaning apparatus, or the like. The cleaned optical display unit is fed to the bonding apparatus by a feeding mechanism. The feeding mechanism includes, for example, a feeing roller, a feeding direction changing mechanism, a rotary drive, a sensor, a controller, and the like.

### (Second and third optical members bonding step)

The following briefly describes the bondings of second and third optical members. These are each equivalent to the bonding step of the first optical member. A basically different point thereof is that the second optical member is laminated on the front surface of the first optical member through a pressure-sensitive adhesive interposed therebetween, and the third optical member is laminated on the front surface of the second optical member (S16-1 and S26-1 in Fig. 1). According to the above, the first, second, third optical members are in turn laminated on one of the surfaces of the optical display unit. A release film is bonded onto each of material rolls of the second and third optical members through the pressure-sensitive adhesive interposed therebetween in the same manner as the first optical member.

Examples of the combination of the first, second and third optical members include the followings: a polarizer protecting film, a polarizer, and a polarizer protecting film; a compensation film, a polarizer, and a polarizer protecting film; and a polarizer protecting film, a polarizer, and a compensation film. A surface protecting film is beforehand laminated on a polarizer protecting film or compensation film of the outermost third optical member, so as to position the surface protecting film as an outermost layer of the third optical member. For example, a fourth optical member, a fifth optical member and the like may be further laminated thereon. The fourth and fifth optical members are not particularly limited, and may each be the same optical member as described above. It is allowable to laminate the first optical member (for example, a compensation film) on the optical display unit; next laminate, thereon, the second optical member (for example, a polarizing plate) ; and then laminate, on the outermost surface thereof, a surface protecting film.

### (Formation of optical members on the other surface)

In the same way, optical members may be laminated on the other surface of the optical display unit. In this case, before the optical members are laminated on the other surface of the optical display unit, the optical display unit may be rotated by 90 degrees by the feeding direction changing mechanism of the feeding mechanism to make the unit into a crossed nicol relationship with the polarizer on the above-mentioned surface side.

The following describes the step of inspecting the optical display device. An inspecting apparatus inspects the optical display device, wherein the optical members are bonded on both surfaces. An example of the method for the inspection includes a method of, to both surfaces of the optical display device, performing imaging and image processing by use of reflected light. Another example thereof includes a method of photographing a transmitted light image and then image-processing the image. Still another example thereof includes a method of setting up a polarizing film for inspection between a CCD camera and the inspection target. The algorithm for the image processing may be a known manner. For example, defects can be detected by, for example, grayscale determination based on binarization.

Based on the defect information obtained by the inspecting apparatus, the optical display device is caused to undergo a non-detective-article-determination. The optical display device is, when it is determined to be non-defective, fed to the next step, which is a mounting step. When the optical display device is determined to be defective, the optical display device is subjected to reworking processing and then optical members are newly bonded thereto. Next, the workpiece is inspected. When the workpiece is determined to be non-defective, the workpiece is shifted to a mounting step. When the workpiece is determined to be defective, the workpiece is again subjected to reworking processing or is discarded.

In the above-mentioned sequential manufacturing steps, the optical display device can be appropriately manufactured by carrying out the steps of laminating each the optical member of the plural optical members in turn on a surface of the optical display unit in a continuous manufacturing line. When the above-mentioned individual steps are performed, in particular, inside an isolating structure isolated from any factory, the individual optical members can be bonded onto the optical display unit in an environment where cleanness is kept, so that a high-quality optical display device can be manufactured.

It is unnecessary to manufacture a laminated optical member including many optical members in advance; thus, the workability is improved. Moreover, there is not caused a nip of a contaminant that is generated in the process for manufacturing the laminated optical member. Thus, the yield ratio of the optical display device is improved. Since defect-inspection is made for each of the optical members, the yield ratio of the optical member is largely improved so that manufacturing costs are largely decreased.

### (Changing step)

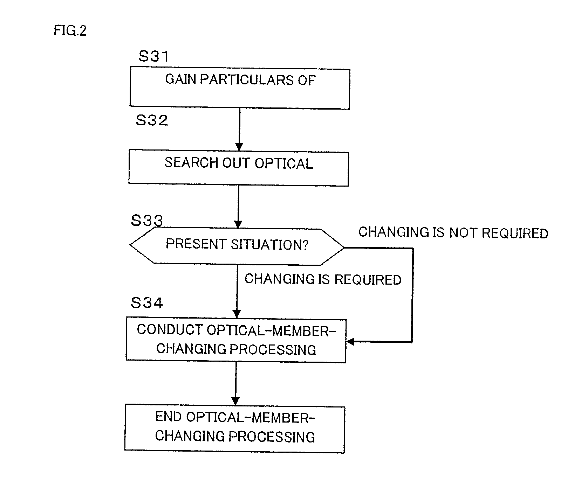

Fig. 2 shows a flowchart for changing optical members. A description is made about a step in which in the case of preparing various optical members, the optical members are automatically selected and set. A controller gains the specifications of an optical display device (S31). Examples of the specifications include the size and the kind thereof, and identifying data thereon. The gain may be attained by manual input through an operating panel by an operator, or may be from input-information obtained from identifying information attached to the optical display unit by means of a reader. Next, the controller uses, as a key, the specifications of the optical display device to search out an optical member from a database of the product- specifications memorized in a memory (S32). Next, the controller compares an optical member set at present with the searched-out, required optical member (S33). When the optical member set at present in a first-optical-member-setting means is consistent with the searched-out optical member, the set optical member is not changed. By contrast, when the optical member set at present in the first-optical-member-setting means is not consistent with the searched-out optical member, a changing processing of the optical member is conducted (S34). This operation is conducted about each of necessary optical members.

According to the above, in accordance with the specifications of the optical display device, the specifications of optical members are automatically determined so that the presently-set optical member material rolls may be automatically changed to materials rolls of the optical members. When an optical display device desired to be manufactured is, for example, a portable telephone, the size and kind of the first optical member are determined correspondingly to the telephone. A material roll therefor is automatically set. About the other optical members, substantially the same determinations and settings are performed. When the optical display device is for a personal computer, a television, an operating screen of a machine, or the like, the same manner is performed.

An example of a changing means for carrying out the changing of optical members includes a mechanism wherein plural optical members are beforehand prepared in optical-member-setting positions, and searched-out optical members are automatically set in accordance with a changing request. Another example thereof includes a structure wherein: all supposed optical members are arranged in a manufacturing line; only searched-out optical members are caused to undergo feeding, inspection, cutting and some other operation in accordance with a changing request; and the optical members are laminated on the optical display unit.

### (Manufacturing system)

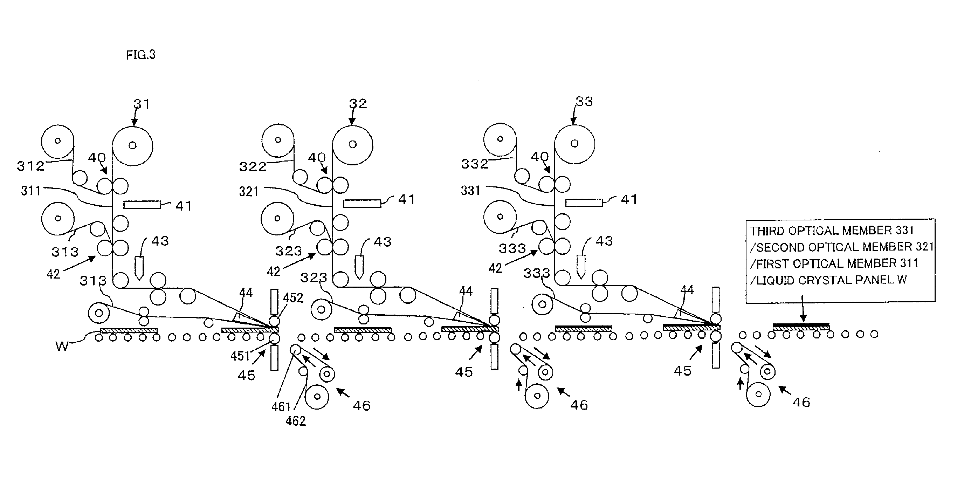

Fig. 3 schematically shows the whole of the structure of an optical display device manufacturing system. In Fig. 3, first, second and third optical members 311, 321 and 331 are in turn laminated on one of two surfaces of an optical display unit W (illustrated as a liquid crystal panel in Fig. 3). The number of the optical members to be laminated may be smaller or larger than the number of these members. In the same manner, each the optical member of plural optical members may also be in turn laminated on the other surface (the lower surface in Fig. 3) of the liquid crystal panel. In this case, the laminated mechanism viewed from the upper surface of the panel illustrated in Fig. 3 may be applied to the laminated mechanism viewed from the lower surface.

Release-film-attached material rolls 31, 32 and 33 for the first, second and third optical members 311, 321 and 331, respectively, are set on a roll mount apparatus connected to a motor and the like so as to be freely rotated or rotated at a constant rotating speed. The rotating speed is set by a controller so that rollers are controlled to be driven. The apparatus is also connected to the above-mentioned changing means so that any optical member can be automatically changed. The material roll 31 has a laminated structure including the first optical member 311, a pressure-sensitive adhesive layer, and a release film 312. The material roll 32 has a laminated structure including the second optical member 321, a pressure-sensitive adhesive layer, and a release film 322. The material roll 33 has a laminated structure including the third optical member 331, a pressure-sensitive adhesive layer, and a release film 332.

Feeders are feeding mechanisms for feeding the respective optical members at the downstream side. The feeders are each controlled by the controller.

Pre-inspection peeling apparatuses 40 peel the release films 312, 322 and 332 from the release-film-attached first, second and third optical members 311, 321 and 331 fed, respectively, and then wind the release films on rolls, respectively. The winding speeds onto the rolls are controlled by the controller. Each peeling mechanism (not illustrated) has a knife edge portion having a sharp tip, and is formed in such a manner that one of the release films is wound and hung on this knife edge portion so as to turn the direction of the feeding, thereby peeling the release film and further feeding the optical member from which the release film has been peeled into a feeding direction.

One out of defect-inspection apparatuses 41 makes a defect-inspection of the first optical member 311 after the release film 312 is peeled. Substantially the same defect-inspection is made about the second and third optical members 321 and 331. The defect-inspection apparatuses 41 each analyze data on images photographed through a CCD camera, detect defects, and further calculate position coordinates thereof. The position coordinates of the defects are supplied to a skip cut made by each cutting apparatus which is to be described later.

One out of release film bonding apparatuses 42 bonds a new release film 313 onto the first optical member 311 through a pressure-sensitive adhesive layer interposed therebetween after the defect-inspection. As illustrated in Fig. 3, from a material roll of the release film 313, the release film 313 is rolled out, and then the release film 313 and the first optical member 311 are sandwiched between a pair or pairs of rolls. By the paired rolls, a predetermined pressure is caused to act thereon, thereby bonding the two onto each other. The rotation speed of the paired rolls, the control of the pressure therebetween, and the control of the feeding thereof are controlled by the controller. In substantially the same manner, new release films 323 and 333 are bonded onto the second and third optical members 321 and 331, respectively.

After the bonding of the new release film 313, one of cutting apparatuses 43 cuts the first optical member 311 and the pressure-sensitive adhesive layer into a predetermined size without cutting the release film 313. The cutting apparatus 43 is, for example, a laser. Based on the position coordinates of the defects detected in the defect-inspection processing, the cutting apparatus 43 cuts the two into a predetermined size so as to avoid regions of the defects. In other words, any defect-region-containing cut article is to be rejected as a defective article by a rejection apparatus 46 in a subsequent step. Alternatively, the cutting apparatus 43 may ignore the existence of the defects, and cut the two continuously into a predetermined size. In this case, in a bonding processing which is to be described later, the regions can be removed without being bonded. The control in this case is also attained by the function of the controller. In the same manner, new release films 323 and 333 are bonded onto the second and third optical members 321 and 331, respectively, and then the second optical member 321 and the pressure-sensitive adhesive layer thereon, as well as the third optical member 331 and the pressure-sensitive adhesive layer thereon, are cut into a predetermined size without cutting the release film 323 as well as the release film 333.

About the cutting apparatus 43, a holding table for adsorbing and holding the optical member from the rear surface thereof is arranged, and a laser is positioned over the optical member. The cutting apparatus 43 is shifted in parallel so as to scan the laser in the width direction of the optical member, and cut the optical member and the pressure-sensitive adhesive layer, at a predetermined pitch in the feeding direction thereof, without cutting the release film at the lowest region (hereinafter, the cutting may be referred to as "half cut" as the case may be). This laser is preferably formed to be integrated with an air nozzle, for blowing hot wind toward the cutting regions, and a fume collecting duct, for collecting gas (fume) generated from the cut regions and fed by the hot wind, in the state where the nozzle and the duct are opposed to each other. When the optical member is adsorbed on the holding table, an accumulator (not illustrated) acts onto the feeing mechanism so as not to stop a continuous feeding of optical members at the downstream and upstream side of the optical member. This operation is also controlled by the controller.

After the cutting processing, one out of bonding apparatuses bonds the first optical member 311, from which the release film 313 has been peeled by the peeling apparatus 44 onto a liquid crystal panel W through a pressure-sensitive adhesive layer interposed therebetween. Only the first optical member 311 determined to be non-defective by one of the defect-inspection apparatuses 41 is bonded onto the liquid crystal panel W. The first optical member 311 determined to be non-defective and the liquid crystal panel W are fed in synchronization with a position where they are to be bonded to each other. The first optical member 311 and the liquid crystal panel W are fed in such a manner that respective tips thereof are put onto each other. This is realized by a matter that the controller controls the feeder (containing the accumulator) and the feeding mechanism to be moved while the two are linked to each other.

In the bonding operation, the first optical member 311 is bonded onto the liquid crystal panel W while the member 311 is brought into contact with a surface of the liquid crystal panel W under pressure by a pair of rolls 45. The pushing pressure of the pair rolls 45 and the driving operation thereof are controlled by the controller.

The peeling mechanism of the peeling apparatus 44 has a knife edge portion having a sharp tip, and is formed in such a manner that the release film 313 is wound and hung on this knife edge portion so as to turn the direction of the feeding, thereby peeling the release film 313 and further feeding the optical member 311 from which the release film 313 has been peeled onto the liquid crystal panel W surface. The peeled release film 313 is wound onto a roll. The winding control onto this roll is controlled by the controller.

A bonding mechanism based on the paired rolls 45 includes a press roller, and a guide roller arranged oppositely thereto. The press roller is arranged over the fed liquid crystal panel W in Fig. 3, and the guide roller is arranged under the fed liquid crystal panel W in Fig. 3. The guide roller is a rubbery roller which is rotationally driven through a motor, and is located to be movable up and down. Just above the roller, the press roller which is a metallic roller and is rotationally driven through a motor is located to be movable up and down. When the liquid crystal panel W is fed to the bonding position, the press roller is raised at a position higher than the upper surface of the panel so as to make an interval between the rollers. The same bonding processing is applied to the second and third optical members 321 and 331. The guide roller and the press roller may each be a rubbery roller, or a metallic roller. The liquid crystal panel W is cleaned by a surface polishing apparatus, a water cleaning apparatus, a brush cleaning apparatus, or the like, and fed by one of the feeding mechanisms. The feeding control of the feeding mechanism is also based on a control of the controller.

### (Rejection apparatus)

A description is made about reflection apparatuses 46 for rejecting the optical members. One of the rejection apparatuses 46 is formed to reject the first optical member 311 at the position where the first optical member 311 and the liquid crystal panel W are bonded onto each other. A removing film 462 makes use of the adhesive power of the pressure-sensitive adhesive layer of the optical member to bond the optical member, which is an object to be rejected, to the film itself. However, as the removing film 462, a pressure-sensitive adhesive tape may be used. The same rejecting processing is applied to the second and third optical members 321 and 331.

(1) When the first optical member 311 which is determined to be, for example, a defective article containing defects is fed to the bonding position, the feeding of the liquid crystal panel W is stopped (the feeding mechanism is provided with an accumulating mechanism). A guide roller 451 is shifted downward in the vertical direction.
(2) Next, a rejection roller 461 on which the removing film 462 is stretched is shifted to the bonding position, which is the fixed position of the guide roller 451.
(3) A press roller 452 is shifted downward in the vertical direction.
(4) The press roller 452 pushes the first optical member 311 toward the rejection roller 461 to bond the first optical member 311 onto the removing film 462. The first optical member 311 together with the removing film 462 is wound onto a winding roller.
(5) After the rejection, the press roller 452 is raised so that the rejection roller 461 on which the removing film 462 is stretched is returned to the original position, and the guide roller 451 is returned to the original position. These operations are controlled by the controller.

The rejection apparatus 46 is not limited to the structure for rejecting the optical member at the position where the optical member and the liquid crystal panel W are bonded onto each other. The apparatus 46 may have a mechanism structure for peeling, from the release film, the optical member when it is determined to be defective after the cutting and processing.

The following describes the inspection apparatus of the optical display device. The optical display device obtained by laminating the optical members (first, second and third optical members) onto each other is fed to the inspection apparatus. The inspection apparatus makes inspections about both surfaces of the optical display device fed to the apparatus. In an example of the apparatus, light from a light source is radiated perpendicularly onto the optical display device from the upper surface thereof, and the resultant transmitted image is photographed into image data by a CCD camera. In this case, the polarizers formed on both surfaces of the optical display device satisfy a crossed nicol relationship. Any defect therein is detected as a bright spot; thus, defects in the bonding surfaces or defects in the panel itself can be detected. Moreover, light from another light source is radiated at a predetermined angle onto the front surface of the optical display device, and a reflected light image thereof is photographed into image data by a CCD camera. From these image data, the defects are subjected to image processing, and analyzed so that the optical display device is caused to undergo a non-defective-article determination. A polarizing plate for inspection may be located before the front surface of the CCD camera.

The operating timing of each of the apparatuses is calculated out by, for example, a method of arranging a sensor at a predetermined position and detecting the workpiece, or a method of detecting a rotating member of each of the feeders or feeding mechanisms through a rotary encoder or the like. The controller may be realized by a cooperation action of a software program and hardware resources such as a CPU and a memory. In this case, the memory beforehand memorizes a program software, processing procedures, various settings, and the like. The controller may be composed of exclusive circuits, or a firmware.

### (Manufacturing method/system of another embodiment)

In the above-mentioned manufacturing system, each of the long optical members is cut without cutting the release film, and the release film is peeled to bond the optical member onto the optical display unit. However, the structure of the optical member is not particularly limited thereto. In another embodiment, it is allowable to make each of optical members into the form of a piece having a predetermined size, and subsequently bond the optical members in turn onto an optical display unit. Specifically, each of optical members is beforehand made into a piece form by cutting and processing. Next, from each of the optical member pieces, the release film thereof is peeled by a peeling apparatus, and a bonding apparatus is used to bond the piece onto an optical display unit through a pressure-sensitive adhesive interposed therebetween. By the same operation, next optical members are also in turn laminated onto the optical display unit (in other words, the next optical members are successively laminated onto a surface of the optical members). A pressure-sensitive adhesive layer may be formed on a single surface of each of the optical member pieces or on each surface thereof.

Examples of the structure of each of the optical members are described hereinafter.

### (Polarizer)

Individual treatments of a polyvinyl alcohol based film, i.e., the dyeing, crosslinking and stretching of the film may not be separately conducted. Thus, the treatments may be simultaneously conducted. The order of the individual treatments may be selected at will. The polyvinyl alcohol based film may be a polyvinyl alcohol based film subjected to swelling treatment. In general, the polyvinyl alcohol based film is immersed into a solution containing iodine and a dichroic dye to adsorb iodine or the dichroic dye thereon, thereby dyeing the film. Thereafter, the film is cleaned, stretched uniaxially at a stretch ratio of 3 to 7 in a solution containing boric acid, borax, or the like, and then dried. It is particularly preferred to stretch the resultant into a solution containing iodine and a dichroic dye, further stretch the stretched film in a solution containing boric acid, borax, or the like (two-stage stretching), and then dry the film since the alignment of iodine is increased and the polarization degree property is improved.

The processing for bonding the polarizer and a transparent polarizer protecting film, which is a protecting film therefor, onto each other is not particularly limited, and may be conducted by aid of, for example, an adhesive including a vinyl alcohol based polymer, an adhesive including boric acid or borax, and a water-soluble crosslinking agent for a vinyl alcohol based polymer, such as glutaraldehyde, melamine or oxalic acid, or some other adhesive. This adhesive layer is formed as a coated and dried layer of an aqueous solution, or the like. When the aqueous solution is prepared, other additives or a catalyst such as an acid may be blended if necessary.

### (Polarizer protecting layer: polarizer protecting film)

A polarizer protecting layer laid on a single side or each side of the polarizer may be an appropriate transparent film. Use is made of, for example, a thermoplastic resin excellent in transparency, mechanical strength, thermal stability, water blocking property, isotropy and the like. Specific examples of the thermoplastic resin include cellulose resins such as triacetylcellulose, polyester resins, polyethersulfone resins, polysulfone resins, polycarbonate resins, polyamide resins, polyimide resins, polyolefin resins, (meth)acrylic resins, cyclic polyolefin resins (norbornene based resins), polyallylate resins, polystyrene resins and polyvinyl alcohol resins; and mixtures thereof. The transparent protecting film is bonded onto a single side of the polarizer through an adhesive layer interposed therebetween. On the other side, use may be made of a thermosetting resin or ultraviolet curing resin such as a (meth)acrylic, urethane, acrylic urethane, epoxy or silicone resin for a transparent protecting film. The transparent protecting film may contain one or more appropriate additives that may be selected at will. Examples of the additives include an ultraviolet absorber, an antioxidant, a lubricant, a plasticizer, a release agent, a coloring preventive, a flame retardant, a nucleating agent, an antistatic agent, a pigment, and a colorant.

The thickness of the transparent protecting film may be appropriately decided, and is preferably from about 1 to 500 µm from the viewpoint of strength, workabilities such as handleability, thin-layer property, and the like. The thickness is in particular preferably from 1 to 300 µm, more preferably from 5 to 200 µm. The thickness of the transparent protecting film is in particular appropriately from 5 to 150 µm.

The transparent protecting film may be subjected to surface-modifying treatment before an adhesive is coated thereon in order to improve the tackiness thereof onto the polarizer. Specific examples of the treatment include corona treatment, plasma treatment, flame treatment, ozone treatment, primer treatment, glow treatment, saponifying treatment, and treatment with a coupling agent. As the case may be, an antistatic layer may be formed thereon.

When the optical films according to the invention are each put into practical use, the film may be, for example, an optical film having a multilayered laminate structure wherein various optical layers are laminated onto each other. The optical layers are not particularly limited. Given is, for example, a method of applying hard coating, antireflective treatment, or a surface treatment for the prevention of sticking, diffusion, or anti-glaring to the surface of the transparent protecting film on which no polarizer is bonded (the surface on which the above-mentioned adhesive coated layer is not laid), or laminating an aligned liquid crystal layer for viewing angle compensation, or the like. An example of the multilayered laminate structure is a structure wherein one or more optical films used to form a liquid crystal display device are bonded thereon, examples of the film(s) including a reflector, a semi-transmissive reflector, a retardation plate (such as a half wavelength plate, a quarter wavelength plate or some other wavelength plate (λ plate)), and a viewing angle compensating film. In the case of, in particular, a polarizing plate, the following is preferably used: a reflective or semi-transmissive polarizing plate on which a reflector or semi-transmissive reflector is laminated; an elliptically polarizing plate or circularly polarizing plate on which a retardation plate is laminated; a wide viewing angle polarizing plate on which a viewing angle compensating layer or viewing angle compensating film is laminated; or a polarizing plate on which a brightness enhancement film is laminated.

### (Retardation plate)

An example of the optical film laminated onto the polarizer includes a retardation plate. The retardation plate is, for example, a birefringent film obtained by subjecting a polymeric material to uniaxial or biaxial stretching processing, an aligned film of a liquid crystal polymer, or an article wherein an aligned layer of a liquid crystal polymer is supported on a film. The stretching processing may be conducted by, for example, roll stretching, along-long-gap stretching, tenter stretching, tubular stretching or some other stretching process. In the case of the uniaxial stretching, the stretch ratio is generally from about 1.1 to 3 times. The thickness of the retardation plate is not particularly limited, and is generally from 10 to 200 µm, preferably from 20 to 100 µm.

Examples of the polymeric material include polyvinyl alcohol, polyvinyl butyral, polymethylvinyl ether, polyhydroxyethyl acrylate, hydroxyethylcellulose, hydroxypropylcellulose, methylcellulose, polycarbonate, polyallylate, polysulfone, polyethylene terephthalate, polyethylene naphthalate, polyethersulfone, polyphenylenesulfide, polyphenyleneoxide, polyallylsulfone, polyvinyl alcohol, polyamide, polyimide, polyolefin, polyvinyl chloride and cellulose polymers; and various binary or ternary copolymers and graft copolymers thereof, and blends thereof. These polymeric materials are each made into an aligned product (stretched film) by stretching or the like.

The retardation plate may be a plate having an appropriate retardation in accordance with the use purpose thereof, for example, a purpose of compensating a coloration or viewing angle based on the birefringence of a wavelength plate or liquid crystal layer that may be of various types, or the like. The retardation plate may be a product wherein two or more retardation plates are laminated onto each other to control an optical property such as retardation.

### (Pressure-sensitive adhesive)

In each of the optical members according to the invention, a pressure-sensitive adhesive layer for bonding the optical member to a different member such as a liquid crystal cell is laid. The pressure-sensitive adhesive layer is not particularly limited. The layer may be made of an appropriate pressure-sensitive adhesive according to the prior art, such as an acrylic pressure-sensitive adhesive agent. The pressure-sensitive adhesive layer is preferably a pressure-sensitive adhesive layer having a low moisture absorption coefficient and an excellent heat resistance for the prevention of a foaming phenomenon or peeling phenomenon based moisture absorption, for the prevention of a fall in the optical properties based on a thermal expansion coefficient difference or the like, the prevention of a warp of a liquid crystal cell, and for the formation of an image display device high in quality and excellent in endurance, and the like. The pressure-sensitive adhesive layer may be a pressure-sensitive adhesive layer which contains fine particles to exhibit light diffusivity. The pressure-sensitive adhesive layer may be laid to a required surface as the need arises. In the case of, for example, a polarizing plate including a polarizer and a polarizer protecting layer, the pressure-sensitive adhesive layer may be laid on a single surface or each surface of the polarizer protecting layer, if necessary.

### (Release film)

A release film, which may be referred to as a separator, is temporarily bonded onto an uncovered surface of the pressure-sensitive adhesive layer when each of the optical members is put into practical use in order to attain the prevention of contamination, or the like, so that the surface is covered. This manner makes it possible to prevent any article from contacting the pressure-sensitive adhesive layer in an ordinary handling state. The separator may be an appropriate product according to the prior art, such as a product wherein an appropriate sheet piece, including a plastic film, a rubber sheet, paper, cloth or nonwoven cloth piece, a net, a foamed sheet, a metal foil piece, or an laminate made of two or more thereof, is optionally coated with an appropriate peeling agent, such as a silicone, long-chain alkyl or fluorine-containing peeling agent, or molybdenum sulfide, provided that the above-mentioned thickness conditions may not be considered.

### (Surface protecting film)

A surface protecting film is formed on the surface of the polarizing plate opposite to the surface on which the separator is laid through a weakly pressure-sensitive adhesive agent interposed therebetween. The purpose thereof is mainly for the prevention of scratches and contamination. The surface protecting film may be an appropriate product according to the prior art, such as a product wherein an appropriate sheet piece, including a plastic film, a rubber sheet, paper, cloth or nonwoven cloth piece, a net, a foamed sheet, a metal foil piece, or an laminate made of two or more thereof, is optionally coated with an appropriate peeling agent such as a silicone, long-chain alkyl or fluorine-containing peeling agent, or molybdenum sulfide.

### (Liquid crystal display device)

Each of the optical films in the invention is preferably used to attain the formation of a device that may be of various types, such as a liquid crystal display device, or the like. The formation of the liquid crystal display device may be according to the prior art. Specifically, the liquid crystal display device is generally formed, for example, by fabricating constituting components, such as a liquid crystal cell (corresponding to an optical display unit), an optical film and an optional lighting system, appropriately and then incorporating a driving circuit to the fabricated workpiece. In the invention, the method for the formation is not particularly limited as far as each of the optical films according to the invention is used, and may be according to the prior art. The liquid crystal cell may also be a cell of any type, such as a TN type, an STN type, or n type.

## Claims

1. A method for manufacturing an optical display device having optical members on an optical display unit, comprises step of:
laminating each the optical member of plural optical members in turn on the optical display unit.

2. The method for manufacturing an optical display device according to claim 1, comprises steps of:
inspecting the optical member, and
cutting the optical member in accordance with result of the inspection.

3. The method for manufacturing an optical display device according to claim 2 or 3, wherein the optical members are each made into the state of pieces each having a predetermined size, and subsequently the respective pieces of the optical members are in turn laminated on the optical display unit.

4. The method for manufacturing an optical display device according to claim 1,
wherein a release film is laid on each of the optical members through a pressure-sensitive adhesive interposed therebetween;
which comprises steps of:
feeding a long release-film-attached optical member from a material roll of the release-film-attached optical member;
inspecting the optical member;
cutting the optical member and the pressure-sensitive adhesive into a predetermined size without cutting the release film in accordance with a result of the inspection;
peeling the release film from the optical member; and
laminating the release-film-peeled optical member on the optical display unit through the pressure-sensitive adhesive interposed therebetween.

5. The method for manufacturing an optical display device according to any one of claims 1 to 4, wherein a different optical member is arranged on a surface of the optical display unit which is different from the surface of the optical display unit on which the optical members are arranged.

6. The method for manufacturing an optical display device according to claim 4 or 5, which comprises a changing step using an optical-member-material-roll-changing means so as to select the specifications of the optical members in accordance with the specifications of the optical display device.

7. The method for manufacturing an optical display device according to any one of claims 4 to 6, wherein when the optical member is inspected, the release film thereof is peeled to inspect the optical member, and subsequently a release film is bonded onto the optical member through the pressure-sensitive adhesive interposed therebetween.

8. The method for manufacturing an optical display device according to any one of claims 2 to 7, which comprises a rejecting step of cutting the optical member into the predetermined size when the optical member is determined to be defective as a result of the inspection of the optical member, and rejecting the optical member.

## Amended claims

### Amended claims under Art. 19.1 PCT

**1.** (Amended) A method for manufacturing an optical display device having optical members on an optical display unit, **characterized in that**;
when each the optical member of plural optical members is in turn laminated on the optical display unit,
a release film is laid on each of the optical members through a pressure-sensitive adhesive interposed therebetween,
comprises steps of;
feeding a long release-film-attached optical member from a material roll of the release-film-attached optical member;
cutting the optical member and the pressure-sensitive adhesive into a predetermined size without cutting the release film; and
laminating in turn each of the release-film-peeled optical member on the optical display unit through the pressure-sensitive adhesive interposed therebetween.

**2.** (Deleted)

**3.** (Deleted)

**4.** (Amended) The method for manufacturing an optical display device according to claim 1, further comprises step of inspecting the optical member;
wherein the cutting step is to cut the optical member and the pressure-sensitive adhesive into the predetermined size without cutting the release film in accordance with a result of the inspection.

**5.** (Amended) The method for manufacturing an optical display device according to claim 1 or 4,
wherein a different optical member is arranged on a surface of the optical display unit which is different from the surface of the optical display unit on which the optical members are arranged.

**6.** (Amended) The method for manufacturing an optical display device according to any one of claims 1, 4 and 5, which comprises a changing step using an optical-member-material-roll-changing means so as to select the specifications of the optical members in accordance with the specifications of the optical display device.

**7.** (Amended) The method for manufacturing an optical display device according to any one of claims 4 to 6, wherein when the optical member is inspected, the release film thereof is peeled to inspect the optical member, and subsequently a release film is bonded onto the optical member through the pressure-sensitive adhesive interposed therebetween.

**8.** (Amended) The method for manufacturing an optical display device according to any one of claims 4 to 7, which comprises a rejecting step of cutting the optical member into the predetermined size when the optical member is determined to be defective as a result of the inspection of the optical member, and rejecting the optical member.

Statement under Art. 19.1 PCT
Amended claim 1 is a claim wherein the following **characterized** matters of original claims 1 and 4 are combined with each other: "a release film is laid on each of the optical members through a pressure-sensitive adhesive interposed therebetween, comprises steps of: feeding a long release-film-attached optical member from a material roll of the release-film-attached optical member; cutting the optical member and the pressure-sensitive adhesive into a predetermined size without cutting the release film; and laminating in turn each of the release-film-peeled optical member on the optical display unit through the pressure-sensitive adhesive interposed therebetween." Original claims 2 and 3 are deleted. Amended claim 4 is a claim restricted to the **characterized** matter of original claim 4 that "further comprises step of inspecting the optical member; wherein the cutting step is to cut the optical member and the pressure-sensitive adhesive into the predetermined size without cutting the release film in accordance with a result of the inspection". Amended claims 5, 6 and 8 are each a claim in which the claim numbers cited are amended. The above-mentioned amendments are made within the scope of the disclosure of the present international application when the application was filed.
